# EUROPÄISCHE PATENTSCHRIFT

(11) **EP 2 301 712 B1**
(45) Veröffentlichungstag und Bekanntmachung des Hinweises auf die Patenterteilung: **03.07.2013**
(21) Anmeldenummer: 10010518.8
(22) Anmeldetag: 24.09.2010
(51) Int. Cl.: B23Q 1/48

(54) **Werkstückträger und Werkzeugmaschine**
Workpiece holder and machine tool
Support de pièce à usiner et machine-outil

(30) Priorität: 24.09.2009 DE 102009042579
(43) Veröffentlichungstag der Anmeldung: 30.03.2011
(73) Patentinhaber: Peiseler GmbH & Co.KG, 42855 Remscheid (DE)
(72) Erfinder: Korischem, Benedict, Dr., 40489 Düsseldorf (DE)
(74) Vertreter: Gesthuysen Patent- und Rechtsanwälte

(56) Entgegenhaltungen:
- DE-A1- 2 528 677
- DE-A1- 10 259 215
- FR-A7- 2 402 385

## Beschreibung

Die Erfindung betrifft einen Werkstückträger, insbesondere Drehschwenktisch, mit wenigstens einem Wender, wenigstens einer Wiege und einem Gegenlager, wobei die Wiege um eine sich zwischen dem Wender und dem Gegenlager erstreckende Rotationsachse drehbar am Wender und am Gegenlager gelagert ist, und auf der Wiege eine Werkstückaufnahme vorgesehen ist, und wobei der Wender einen elektrischen Antrieb aufweist, mit dem die Wiege rotierbar ist. Ferner betrifft die Erfindung eine Werkzeugmaschine, umfassend einen zuvor beschriebenen Werkstückträger, insbesondere einen Drehschwenktisch, und eine Werkzeugaufnahme.

Werkzeugmaschinen werden nach der Norm DIN 69651 als "mechanisierte und mehr oder weniger automatisierte Fertigungseinrichtungen, die durch Bewegungen zwischen Werkzeug und Werkstück eine vorgegebene Form oder Veränderung am Werkstück erzeugen" definiert. Die für die Realisierung der Grundfunktion notwendigen Baugruppen - Antriebe, Gestellbauteile, Werkzeugträger und Werkstückträger - bilden das Maschinengrundsystem. Die Ausführungen der Werkzeugaufnahmen und Werkstückträger reichen je nach Maschinenbauform von starren Tischen bis hin zu mehrfach miteinander kombinierten translatorischen und rotatorischen Führungen bzw. Lagerungen. Werkzeuge und Werkstücke werden auf bzw. in entsprechenden Trägern und Aufnahmen gehalten bzw. gespannt.

Eine grundlegende Klassifizierung von Werkzeugmaschinen kann beispielsweise danach erfolgen, ob eine Werkzeugspindel zur Aufnahme des Bearbeitungswerkzeugs horizontal oder vertikal angeordnet ist. Unterklassen werden dabei anhand der Anzahl der verfügbaren Achsen des Werkzeugträgers und der Bauform des Gestells gebildet. Bei der Bauform des Gestells erfolgt die Untergliederung in Konsol- und Bettbauweise, ferner gibt es zusätzlich bei der vertikalen Anordnung der Werkzeugspindel die Portalbauweise.

Aus der DE 25 28 677 A1 ist eine Werkzeugmaschine bekannt, bei der es sich jedoch nicht um eine NC-Werkzeugmaschine handelt. Diese Druckschrift offenbart eine Werkzeugmaschine in Form einer Fräsmaschine, bei der in einem Gestell eine kreisförmige Lünette mit einer horizontalen Achse ausgebildet ist. In der Lünette ist ein Hohlzylinder, der mit einer Konsole verbunden ist, drehbar angeordnet. Die Konsole trägt einen Tisch, auf dem wiederum ein Rundtisch angeordnet ist. Dabei ist der Rundtisch um die Achse der Lünette um maximal 180° drehbar und zusammen mit dem Tisch parallel zur Achse axial verfahrbar. Eine Klemmvorrichtung ermöglicht die Feststellung des Tisches in der ausgewählten Neigungsposition. Senkrecht zur Rotationsachse ist ein Spindelkopf angeordnet, der sowohl vertikal als auch horizontal verfahrbar ist. Zur Aufnahme und Lagerung der Konsole innerhalb der Lünette ist der Tisch sehr massiv ausgebildet.

Auch aus der FR 2 402 385 A ist eine Werkzeugmaschine bekannt, bei der es sich nicht um eine NC-Werkzeugmaschine handelt. Bei dieser bekannten Maschine zum Schneiden, Profilieren und Polieren von Marmor und sonstigen Steinen, kann die Bearbeitung sowohl in Längs- als auch in Querrichtung vorgenommen werden. Hierzu weist die Maschine einen Werkstücktisch mit einer um 360° drehbaren Drehscheibe auf, die auf einem längsverschiebbaren Schlitten angeordnet ist. Der Schlitten ist dabei auf einer wiegenartigen Arbeitsbank angeordnet, die manuell zwischen 0 und 45° verschwenkbar und in der gewünschten Position verriegelbar ist.

Bei heutigen Werkzeugmaschinen handelt es sich in der Regel um NC-Werkzeugmaschinen, d.h. um numerisch gesteuerte Werkzeugmaschinen, die in der Lage sind, Programmanweisungen zu verstehen und in einer vorgegebenen Reihenfolge abzuarbeiten. Während früher Datensätze von Steuerungsbefehle von separaten Datenträger gelesen wurden (klassische NC-Maschinen), handelt es sich heute in erster Linie um CNC-Maschinen, bei denen die Steuerung über einen Computer erfolgt, oder um DNC-Maschinen, bei denen Programme von einem Computer, der eine Serverfunktion erfüllt, über ein Netzwerk zu den zu steuernden Maschinen geschickt werden. Im Rahmen der vorliegenden Anmeldung sollen mit Werkzeugmaschinen alle Arten von numerisch gesteuerte bzw. kontrollierte Werkzeugmaschinen umfasst sein, d.h. neben klassischen NC-Werkzeugmaschinen im engeren Sinne insbesondere auch CNC-Werkzeugmaschinen und DNC-Werkzeugmaschinen.

Bei Werkzeugmaschinen ist neben der Langlebigkeit und den Investitionskosten die Bearbeitungsdauer je Werkstück ein wesentlicher Einflussfaktor für die Herstellungskosten. Zur zeitoptimierten Bearbeitung eines Werkstücks ist dabei nicht nur eine hohe Zerspanleistung wesentlich, sondern auch eine schnelle und präzise Bewegung der Werkzeugaufnahme und des Werkstücks. Geringe Massen, die bezüglich der linearen Bewegung oder in Rotation schnell beschleunigt werden können, sind dabei vorteilhaft. Die gewünschte Präzision beschränkt jedoch die mögliche Reduzierung der Massen, da Steifigkeitsanforderungen erfüllt werden müssen. Insbesondere wenn Beschleunigungskräfte und Geschwindigkeiten zunehmen, stellt die dynamisch betriebene Werkzeugmaschine sehr hohe Anforderungen an die Steifigkeit und das Schwingungsverhalten der Maschine.

Das statische, dynamische und thermo-elastische Verhalten einer Werkzeugmaschine oder eines einzelnen Bauteils kann in hohem Maße die mit der Maschine erreichbaren Bearbeitungsleistungen und die Fertigungsqualität beeinflussen. Das dynamische Verhalten einer Werkzeugmaschine wird maßgeblich von der statischen Steifigkeit, der räumlichen Anordnung und Größe der Bauteilmassen sowie von der Systemdämpfung bestimmt. Schwingungen innerhalb des Systems werden vermieden, indem die Konstruktion mit der Maßgabe einer hohen Eigenfrequenz erfolgt. Eine hohe Eigenfrequenz wird beispielsweise durch Gestaltung der Werkzeugmaschine mit einer hohen statischen Steifigkeit bei gleichzeitiger Minimierung der Massen erreicht.

Aus der DE 102 59 215 A1 ist eine eingangs genannte Werkzeugmaschine bekannt, die als 5-Achsen-Werkzeugmaschine mit einer rotierenden Werkstück-Schwenkachse (A) und einer dazu senkrechten rotierenden Drehtischachse (C) ausgebildet ist. Die Werkzeugaufnahme kann entlang dreier zueinander senkrechter Linearachsen (x, y, z) verfahren werden.

Eine Entwicklung der letzten Jahre lag insbesondere in der Ausbildung unterschiedlicher Varianten von Schwenkköpfen zur Aufnahme der Spindel. Die Schwenkköpfe werden einachsig zum Schwenken oder zweiachsig zum Schwenken in zwei Richtungen ausgeführt. Mit derartigen Schwenkköpfen lässt sich nahezu jegliche Geometrie im Raum abfahren, wobei die hohe Variabilität der Schwenkköpfe jedoch zu einer Reduzierung der Steifigkeit führen kann.

Der vorliegenden Erfindung liegt daher die Aufgabe zugrunde, einen Werkzeugträger und eine Werkzeugmaschine anzugeben, die eine hohe Bearbeitungsleistung bei gleichzeitig guter Fertigungsqualität gewährleisten.

Die vorgenannte Aufgabe ist bei dem erfindungsgemäßen Werkstückträger mit den Merkmalen des Patentanspruchs 1 dadurch gelöst, dass die Werkstückaufnahme mit einer Verfahreinheit entlang einer Linearachse verschiebbar ist, wobei die Linearachse parallel zu der Rotationsachse verläuft, und dass ein die Position bzw. die Stellung der Werkstückaufnahme erfassendes Messsystem und eine numerischen Steuerung vorgesehen sind, wobei das Messsystem mit dem elektrischen Antrieb des Wenders und mit der Verfahreinheit der Werkstückaufnahme elektrisch verbunden ist, so dass die Position bzw. die Stellung der Werkstückaufnahme mittels der numerischen Steuerung steuer- und regelbar ist.

Die Werkstückaufnahme, auf der ein zu bearbeitendes Werkstück befestigbar ist, ist mit der Verfahreinheit auf der Wiege befestigt, so dass die Werkstückaufnahme auf der Wiege - parallel zur Rotationsachse - positionierbar ist. Erfindungsgemäß ist somit auf einer Rotationsachse bzw. auf der rotierbaren Wiege eine Linearachse bzw. die linear positionierbare Werkstückaufnahme angeordnet.

Die Drehung der Wiege um die Rotationsachse ermöglicht es, das Werkstück beliebig rotativ auszurichten und zu positionieren. Durch die zusätzliche lineare Verschiebbarkeit der Werkstückaufnahme mit der Verfahreinheit auf der Wiege ist zusätzlich die Position des Werkstückes, z.B. der Abstand zum Wender, veränderbar. Insbesondere bei kleineren Werkstücken, bei denen das Werkstückgewicht geringer als das Gewicht der Werkzeugaufnahme ist, hat die Beschleunigung der geringeren Masse - in Form des Werkstücks mit der Werkstückaufnahme - auf der Wiege des Werkstückträgers deutliche Vorteile im Vergleich zu bisher bekannten Bauarten.

Die Steifigkeit des Werkstückträgers ist dadurch gesteigert, dass ein Gegenlager vorgesehen ist, an dem die Wiege befestigt ist, wobei sich die Rotationsachse zwischen dem Wender und dem Gegenlager erstreckt, so dass die Wiege zwischen dem Wender und dem Gegenlager drehbar angeordnet ist. Die Wiege ist somit in ihrer Längserstreckung an einem Ende an dem Wender und an dem anderen Ende an dem Gegenlager gelagert. Die Rotationsachse erstreckt sich dabei zwischen dem Wender und dem Gegenlager, so dass die Wiege zwischen dem Wender und dem Gegenlager drehbar ist und durch die beidseitige Lagerung eine Reduzierung der im Betrieb entstehenden Schwingungen gewährleistet ist. Die Werkstückaufnahme - mit dem daran befestigten Werkstück - ist auf der Verfahreinheit zwischen dem Wender und dem Gegenlager auf der Wiege positionierbar. Das Positionieren der Werkstückaufnahme wird folglich parallel zur längserstreckten Rotationsachse der Wiege realisiert.

Als Werkstückaufnahme kann dabei ein Schlitten oder vorzugsweise ein Teilgerät vorgesehen sein. Sind auf der Wiege mehr als eine Werkstückaufnahme angeordnet, so können sowohl mehrere Schlitten, mehrere Teilgeräte als auch ein oder mehrere Schlichten und ein oder mehrere Teilgeräte vorgesehen sein. Die Flexibilität der Positionierung des Werkstückes durch den Werkstückträger wird durch eine vorteilhafte Ausgestaltung zusätzlich gesteigert, bei der das Teilgerät über eine Planscheibe zur Montage wenigstens eines Werkstückes verfügt, wobei die Planscheibe vorzugsweise um eine senkrecht zur Linearachse verlaufende Teilrotationsachse rotierbar ist. Das Werkstück wird dazu auf der Planscheibe des auf der Wiege vorgesehenen Teilgeräts befestigt und ist dadurch um die Teilrotationsachse und die Rotationsachse rotierbar, wobei gleichzeitig eine lineare Verschiebbarkeit des Teilgeräts entlang der Linearachse möglich ist. Das Werkstück ist folglich in einer beliebigen Ausrichtung auf der Wiege positionierbar.

Zur Befestigung der für die Werkzeugaufnahme bzw. das Teilgerät vorgesehenen Verfahreinheit hat es sich als vorteilhaft herausgestellt, wenn die Wiege über eine Grundplatte verfügt, auf der die Verfahreinheit vorgesehen ist. Bevorzugt ist dabei die Grundplatte versetzt zur Rotationsachse angeordnet. Die Wiege verfügt dazu über wenigstens eine Wange, bevorzugt über zwei Wangen, wobei jeweils eine Wange am Wender bzw. am Gegenlager drehbar befestigt ist. Zwischen den Wangen der Wiege ist die Grundplatte vorgesehen, die jeweils in einem äußeren Randbereich einer Wange befestigt bzw. angeordnet ist, so dass die Grundplatte außerhalb der Rotationsachse angeordnet ist, jedoch um diese drehbar ist. Die Wiege kann dabei einstückig, beispielsweise als Gussteil ausgebildet sein oder die Grundplatte und die Wangen können als separate Bauteile fest miteinander verbunden, insbesondere verschraubt oder verschweißt sein. Die Ausdehnung der Grundplatte in ihrer Längserstreckung zwischen den Wangen definiert den maximal möglichen Verschiebeweg des Teilgeräts auf der Wiege. Die Grundplatte definiert dabei eine Ebene, wobei die vorgenannte Teilrotationsachse vorzugsweise parallel zu deren Ebenennormale ist.

Gemäß einer bevorzugten Ausgestaltung des Werkstückträgers ist vorgesehen, dass die Verfahreinheit wenigstens zwei parallele Schienen und wenigstens eine Antriebsspindel umfasst. Die Schienen sind dabei parallel zueinander auf der Wiege - bevorzugt auf der Grundplatte der Wiege - befestigt und dienen der linearen Führung der Werkstückaufnahme auf der Wiege entlang der Linearachse. Durch die Verwendung von zwei parallelen Schienen wird ein Verkanten der Werkstückaufnahme während des Verfahrens vermieden und eine zuverlässige und stabile Führung der Werkstückaufnahme gewährleistet. Die stabile Führung trägt dazu bei, dass Schwingungen innerhalb des Werkstückträgers während der Bearbeitung reduziert werden. Das Profil der Schienen kann dabei als Flach-, Schwalbenschwanz-, Prismenführung oder zylindrische Führung ausgestaltet sein.

Das Positioniern der Werkstückaufnahme auf den Schienen erfolgt bevorzugt mit wenigstens einer Antriebsspindel, die - in Abhängigkeit von ihrer Drebrichtung - die Werkstückaufnahme und damit auch das Werkstück entweder in Richtung des Wenders oder des Gegenlagers bewegt. Die Antriebsspindel verfügt bevorzugt über einen eigenen, separaten Antrieb, wie z.B. einen Elektromotor, mit dem die Antriebsspindel direkt oder über ein Getriebe mit einem Drehmoment beaufschlagbar ist. Die Antriebsspindel ist vorzugsweise in einer Ausnehmung innerhalb der Wiege bzw. der Grundplatte, unterhalb der Werkstückaufnahme angeordnet. Die Grundplatte kann dabei auch durch zwei parallel zueinander angeordnete Befestigungsschienen gebildet sein, auf denen jeweils eine Schiene der Verfahreinheit angeordnet ist, wobei dann die Antriebsspindel parallel zu und zwischen den beiden Befestigungsschienen angeordnet ist.

Um die Wiege in eine Rotationsbewegung um die Rotationsachse zu versetzen, verfügt der Wender über einen Antrieb, mit dem die Wiege rotierbar ist. Der Antrieb ist dabei im Gehäuse der Wiege untergebracht und überträgt ein Drehmoment beispielsweise auf die Wange der Wiege und versetzt diese somit in Rotationsbewegung. Die Übertragung des Drehmoments erfolgt direkt oder über ein Getriebe. Alternativ kann der Antrieb auch außerhalb des Gehäuses des Wenders vorgesehen sein, wobei das Drehmoment dabei über ein Getriebe, eine einfache Verzahnung oder einen Zahnriemen auf die Wiege übertragen wird.

Für eine vorteilhafte und exakte Positionierung der Wiege ist vorzugsweise vorgesehen, dass auch das Gegenlager einen Antrieb aufweist, folglich im Wesentlichen baugleich zum Wender ausgestaltet ist und somit ebenfalls als Wender bezeichnet werden könnte. Der Antrieb des Gegenlagers ist dabei bevorzugt synchron zum Antrieb des Wenders gesteuert, so dass insgesamt eine zuverlässige und präzise Positionierung entlang der Rotationsachse - auch bei schweren Werkstücken - zuverlässig realisiert ist. In Abhängigkeit vom Anwendungsfall ist vorgesehen, dass jeweils nur einer der Antriebe verwendet wird und der zweite Antrieb nach Bedarf zuschaltbar ist. Je nach Dimension der Wiege und Gewicht des Werkstückes kann das erforderliche Antriebsdrehmoment zur Rotation der Wiege unterschiedlich sein.

Gemäß einer Weiterbildung des Werkstückträgers ist vorgesehen, dass wenigstens der Wender ortsfest verankert ist. Durch die Möglichkeit der flexiblen linearen und rotativen Positionierung des Werkstücks auf der Wiege und durch die Möglichkeit der Rotation der Wiege, ist eine zusätzliche lineare Verschiebung des gesamten Werkstückträgers nicht erforderlich, so dass der Wender - vorzugsweise der Wender und das Gegenlager - ortsfest verankert sein können. Alternativ kann der Werkstückträger bzw. die Wiege jedoch auch mittels eines Stellmittels entlang einer Stellachse linear positionierbar sein, die sich in der Ebene der Wiege erstreckt und senkrecht zur Linearachse verläuft.

Die eingangs genannte Aufgabe wird bei der erfindungsgemäßen Werkzeugmaschine dadurch gelöst, dass die Werkstückaufnahme oder der Teil der Werkzeugaufnahme, der das Werkzeug aufnimmt, mit Hilfe eines ersten Stellmittels entlang einer ersten Stellachse (z) verfahrbar ist, und dass eine Steuerung und ein die Position bzw. die Stellung der Werkstückaufnahme erfassendes Messsystem vorgesehen sind, die mit den einzelnen elektrischen Antrieben der Linearachsen (x, y, z) und der Rotationsachsen (A, C) verbunden sind, so dass die Position bzw. die Stellung der Werkstückaufnahme mittels der Steuerung steuer- und regelbar ist.

Bei einer solchen Werkzeugmaschine lässt sich durch die auf der Wiege verschiebbare Werkstückaumahme, bei der es sich beispielsweise um ein Teilgerät handeln kann, das Werkstück vorteilhaft relativ zur Werkzeugaufnahme positionieren, so dass das Werkstück aus nahezu allen Raumrichtungen von dem in der Werkzeugaufnahme befindlichen Werkzeug bearbeitet werden kann. Durch die Positionierbarkeit der Werkstückaufnahme auf der Wiege braucht die Werkzeugaufnahme nicht in Richtung der Linearachse verfahrbar sein, wodurch sich die Ausgestaltung der Werkzeugaufnahme vereinfacht, die Steifigkeit des Gesamtsystems der Werkzeugaufnahme erhöht und Schwingungen aufgrund der starren Ausgestaltung vermindert werden. Der Werkstückträger der Werkzeugmaschine kann dabei im Einzelnen so ausgebildet sein, wie dies nachfolgend noch beschrieben wird.

Die Werkzeugmaschine weist eine Steuerung, insbesondere eine numerische Steuerung, und ein Messsystem auf, das die Position bzw. die Stellung der Werkstückaufnahme erfassen kann. Mit Hilfe der vom Messsystem gelieferten Werte (Ist-Werte) kann somit durch einen Vergleich mit den vorgegebenen SollWerte festgestellt werden, ob sich die Werkstückaufnahme - und damit auch das Werkstück - tatsächlich an der zur Bearbeitung durch das Werkzeug aktuell vorgegebenen Position und in der vorgegeben Orientierung befindet. Bei einer Abweichung der Ist-Werte von den Soll-Werten werden dann die einzelnen Antriebe der Linearachsen, d.h. die Antriebe der Stellmittel der Werkzeugaufnahme und der Antrieb der Verfahreinheit der Werkstückaufnahme, und/oder die Antriebe der Rotationsachsen, d.h. der Antrieb der Wiege und der Antrieb der Planscheibe des Teilgeräts, entsprechend von der Steuerung angesteuert, d.h. die Motoren mit Energie versorgt. Durch einen entsprechenden Regelkreis der Steuerung können somit die einzelnen linearen Bewegungen sowie die Rotationsbewegungen der einzelnen Achsen derart gesteuert und geregelt werden, dass ein zu bearbeitendes Werkstück mit hoher Präzision in die gewünschte Position relativ zu dem in der Werkzeugaufnahme angeordneten Werkzeug positioniert werden kann.

Gemäß einer bevorzugten Weiterbildung der Werkzeugmaschine ist vorgesehen, dass die Werkzeugaufnahme oder der Teil der Werkzeugaufhahme, der das Werkzeug aufnimmt, mit Hilfe eines zweiten Stellmittels entlang einer zweiten Stellachse verfahrbar ist, wobei die zweite Stellachse senkrecht zur Linearachse des Werkstückträgers und senkrecht zur ersten Stellachse verläuft. Die Werkzeugaufnahme oder der Teil der Werkzeugaufnahme, der das Werkzeug aufnimmt, ist somit durch das erste und durch das zweite Stellmittel bezüglich der Entfernung zur Rotationsachse positionierbar: Die Werkzeugaufnahme muss dabei nicht parallel zur Rotationsachse verfahrbar sein, da diese Bewegung bereits von der Werkstückaufnahme - mit dem Werkstück - auf der Verfahreinheit auf der Wiege ausführbar ist.

Um die Flexibilität bezüglich der Bewegbarkeit und auch die Laufzeit für die Verfahrwege zu reduzieren, ist vorzugsweise vorgesehen, dass der Werkstückträger mit einem dritten Stellmittel entlang der zweiten Stellachse verfahrbar ist, wobei die zweite Stellachse senkrecht zur Linearachse des Werkstückträgers und senkrecht zur ersten Stellachse verläuft. Dabei ist das dritte Stellmittel derart unterhalb des Wenders bzw. auch unterhalb des Gegenlagers positioniert, dass der Wender, die Wiege und ggf. auch das Gegenlager linear entlang der zweiten Stellachse verfahrbar sind. Die Verfahrzeiten werden dadurch verkürzt, dass bei einer Bearbeitung sowohl der Werkstückträger entlang der zweiten Stellachse auf die Werkzeugaufnahme zu, als auch die Werkzeugaufnahme - in einer anderen Ebene - in Richtung des Werkstückträgers entlang der zweiten Stellachse verfahrbar ist, wodurch die Verstellzeiten zur linearen Positionierung - insbesondere der Entfernung - der Werkzeugaufnahme relativ zum Werkstückträger bzw. zum Werkstück verringert werden.

Eine Weiterbildung, die eine größtmögliche Präzision aufgrund der Reduzierung von Schwingungen ermöglicht, sieht vor, dass der Werkstückträger ortsfest verankert ist. Dabei ist der Wender bzw. auch das Gegenlager ortsfest verankert, so dass Schwingungen des Werkstückträgers wesentlich verringert werden. Bei dieser Ausgestaltung ist lediglich die Werkzeugaufnahme bezüglich ihrer Entfernung - sowohl vertikal, als auch horizontal - zur Rotationsachse, zum einen über das erste Stellmittel, zum anderen über das zweite Stellmittel positionierbar, während der Werkstückträger selber ortsfest positioniert ist.

Als besonders vorteilhaft hat sich weiterhin herausgestellt, wenn die Werkzeugaufnahme einen Ständer und einen Spindelkasten aufweist. Der Spindelkasten ist über das erste Stellmittel an dem Ständer befestigt, so dass der Spindelkasten relativ zum Ständer bewegbar ist. Diese Ausgestaltung ermöglicht es, dass durch die Bewegung des Ständers entlang der zweiten Stellachse - mit dem zweiten Stellmittel - der horizontale Abstand des Ständers und des Spindelkastens zur Rotationsachse einstellbar ist. Gleichzeitig ist durch die Verfahrbarkeit des Spindelkastens am Ständer der vertikale Abstand der Werkzeugaufnahme - insbesondere des Spindelkastens - relativ zur Rotationsachse variabel einstellbar.

Die Stellmittel - erstes, zweites und drittes - bestehen jeweils aus einem System von zusammenwirkenden Einheiten, beispielsweise einer Schiene, die mit entsprechenden auf der Schiene bewegbaren Gegenstücken zusammenwirkt, so dass ein Bauelement, z.B. Ständer oder Spindelkasten, mit den daran befestigten Gegenstücken auf den Schienen verfahren kann bzw. auch umgekehrt. Wenn folglich beispielsweise der Spindelkasten mit dem ersten Stellmittel an dem Ständer befestigt sei, bedeutet das, dass beispielsweise die Schiene oder die Gegenstücke am Ständer bzw. entsprechend am Spindelkasten befestigt sind, so dass eine Relativbewegung zwischen dem Ständer und dem Spindelkasten möglich ist, indem die Schiene mit den Gegenstücken zusammenwirkt.

Eine bevorzugte Ausgestaltung der Werkzeugmaschine sieht vor, dass die Werkzeugaufnahme eine Spindel aufweist, die wenigstens in ihrer Befestigungsebene rotieren kann. Dabei ist die Spindel vorzugsweise an bzw. in dem Spindelkasten befestigt. Je nach Ausgestaltung ist vorgesehen, dass die Spindel horizontal oder alternativ vertikal positioniert ist, wodurch sich unterschiedliche Bearbeitungsmöglichkeiten ergeben. Insbesondere wenn die Spindel - ähnlich der Funktionalität eines Schwenkkopfes - wenigstens in ihrer Befestigungsebene rotierbar ist, so wird hierdurch eine zusätzliche Freiheit bezüglich der Positionierung des Werkzeuges relativ zum Werkstück bzw. zum Werkstückträger möglich.

Die einzelnen Linearachsen, d.h. die linear positionierbare Werkstückaufnahme sowie die einzelnen Stellmittel der Werkzeugaufnahme, und die einzelnen Rotationsachsen, d.h. die rotierende Wiege und die Planscheibe eines Teilgeräts, sind dabei jeweils mit einem eigenen Antrieb und einer eigenen Messeinheit versehen, wobei die Antrieb von der zentralen numerischen Steuerung der Werkzeugmaschine gesteuert und geregelt werden.

Eine letzte Ausgestaltung der Werkzeugmaschine, die hier noch beschrieben werden soll, sieht vor, dass der Werkstückträger und die Werkzeugaufnahme an wenigstens einem gemeinsamen Maschinengestell befestigt sind. Ein gemeinsames Maschinengestell für den Werkstückträger und die Werkzeugaufnahme hat den Vorteil, dass hohe Kräfte zwischen dem Werkstückträger und der Werkzeugaufnahme aufbringbar sind, da sie sich innerhalb des Maschinengestells ausgleichen. Das Maschinengestell muss dafür entsprechend stabil und steif ausgestaltet sein, damit es sich unter der Belastung nicht verformt und die Präzision bei der Fertigung gewährleistet ist. Ein Verformen des Maschinengestells könnte eine Beschädigung des Werkzeugs oder des Werkstücks zur Folge haben.

Im Einzelnen gibt es nun eine Vielzahl von Möglichkeiten den erfindungsgemäßen Werkstückträger oder die erfindungsgemäße Werkzeugmaschine auszugestalten und weiterzubilden. Im Einzelnen wird dazu verwiesen sowohl auf die den Patentansprüchen 1 und 7 nachgeordneten Patentansprüche, als auch auf die nachfolgende Beschreibung von bevorzugten Ausführungsbeispielen in Verbindung mit der Zeichnung. In der Zeichnung zeigen:
- Fig. 1: ein erstes Ausführungsbeispiel eines erfindungsgemäßen Werkstückträgers in perspektivischer Seitenansicht,
- Fig. 2: ein Ausführungsbeispiel einer erfindungsgemäßen Werkzeugmaschine in perspektivischer Seitenansicht, mit einem Werkstückträger gemäß Fig. 1 und einer Werkzeugaufnahme,
- Fig. 3: ein zweites Ausführungsbeispiel eines erfindungsgemäßen Werk- stückträgers in perspektivischer Seitenansicht, und
- Fig. 4: ein zweites Ausführungsbeispiel einer Werkzeugaufnahme für eine erfindungsgemäße Werkzeugmaschine.

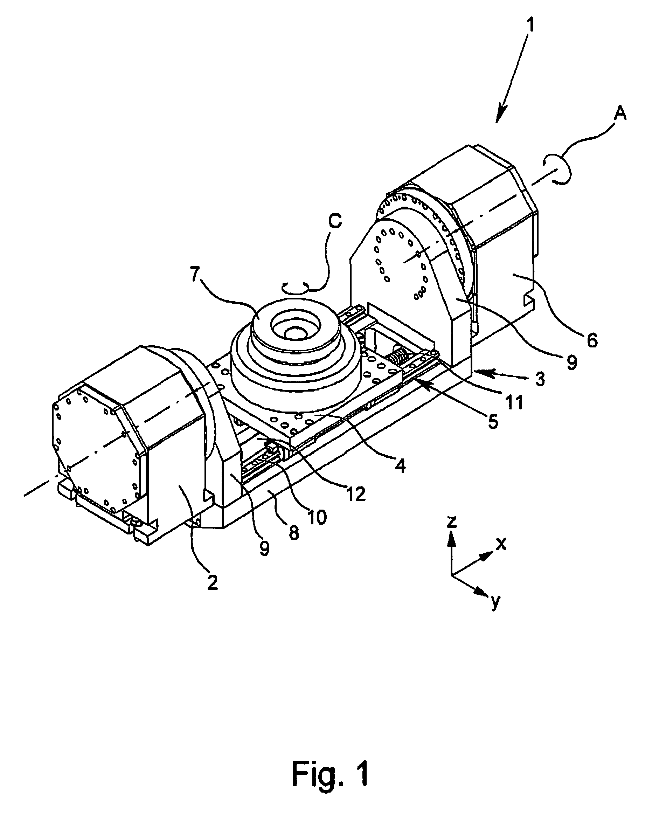

Fig. 1 zeigt ein Ausführungsbeispiel des erfindungsgemäßen Werkstückträgers 1 in einer perspektivischen Seitenansicht. Der Werkstückträger 1 umfasst unter anderem einen Wender 2, der ortsfest verankert ist und an dem eine Wiege 3 um eine Rotationsachse A drehbar gelagert ist. Auf der drehbar gelagerten Wiege 2 ist ein Teilgerät 4 als Werkstückaufnahme mittels einer Verfahreinheit 5 verfahrbar bzw. positionierbar befestigt. Die Positionierung des Teilgeräts 4 mit der Verfahreinheit 5 erfolgt entlang einer Linearachse x, die parallel zur Rotationsachse A der Wiege 2 verläuft. An der dem Wender 2 gegenüberliegenden Seite der Wiege 3 ist die Wiege 3 an einem Gegenlager 6 gelagert, das bei diesem Ausgestaltungsbeispiel identisch zum Wender 2 ausgestaltet ist. Die Wiege 3 ist somit sowohl am Wender 2 als auch am Gegenlager 6 gelagert, so dass die Wiege 3 entlang ihrer Längsachse um die Rotationsachse A drehbar ist. Die Rotationsachse A verläuft dabei zentral durch den Wender 2 und das Gegenlager 6.

Das Teilgerät 4 ist auf der Wiege 3 zwischen Wender 2 und dem Gegenlager 6 verfahrbar, wobei der maximale Verfahrweg durch die Länge der Wiege 3 bzw. die Entfernung zwischen Wender 2 und Gegenlager 6 bestimmt ist. Das Teilgerät 4 weist eine Planscheibe 7 auf, die um eine Teilrotationsachse C rotierbar ist, wobei die Teilrotationsachse C senkrecht zur Rotationsachse A angeordnet ist. Dadurch ist eine flexible Positionierung eines in der Planscheibe 7 gehaltenen - nicht dargestellten - Werkstücks auf der Wiege 3 möglich; das Verfahren des Teilgeräts 4 auf der Wiege 3 ermöglicht die lineare Positionierung entlang der Rotationsachse A, während eine rotative Ausrichtung des Werkstücks senkrecht zur Linearachse x durch die Rotierbarkeit der Planscheibe 7 um die Teilrotationsachse C realisiert wird. Der Werkstückträger 1, kann auch als Drehschwenktisch oder - aufgrund der beiden Rotationsachsen A und C - als 2-Achsen-Schwenkeinrichtung bezeichnet werden.

Die Verfahreinheit 5, mit dem das Teilgerät 4 an der Wiege 3 montiert ist, ist auf einer Grundplatte 8 der Wiege 3 befestigt. Die Grundplatte 8 ist in ihren Endbereichen jeweils an einer Wange 9 befestigt, die ihrerseits jeweils drehbar am Wender 2 bzw. am Gegenlager 6 befestigt sind. Die Form der Wange 9 ist asymmetrisch, so dass eine exzentrische Anordnung der Grundplatte 8 erfolgt, wodurch die Grundplatte 8 versetzt zur Rotationsachse A angeordnet, jedoch um die Rotationsachse A drehbar ist.

Die Verfahreinheit 5 zum Positionieren des Teilgeräts 4 entlang der Linearachse x besteht bei dem dargestellten Ausführungsbeispiel aus zwei Schienen 10, die parallel zueinander auf dem Randbereich der Grundplatte 8 angeordnet sind, so dass das Teilgerät 4 auf den Schienen 10 verfahren werden kann, ohne dass das Teilgerät 4 auf den Schienen 10 verkantet. Die Schienen 10 und die entsprechenden Gegenstücke an dem Teilgerät 4 sind dabei derart ausgestaltet, dass das Teilgerät 4 sicher und spielfrei auf der Wiege 3 gehalten wird, während eine präzise lineare Positionierbarkeit gewährleistet ist. Das Verfahren des Teilgeräts 4 auf den parallelen Schienen 10 wird mit einer Antriebsspindel 11 realisiert, die in einer Ausnehmung 12 innerhalb der Grundplatte 8 angeordnet ist. Die Antriebsspindel 11 steht dabei derart mit dem Teilgerät 4 in Verbindung, dass das Teilgerät 4 durch vor- oder rückläufiges Drehen der Antriebsspindel 11 entweder in Richtung des Wenders 2 oder in Richtung des Gegenlagers 6 auf den Schienen 10 bewegt wird.

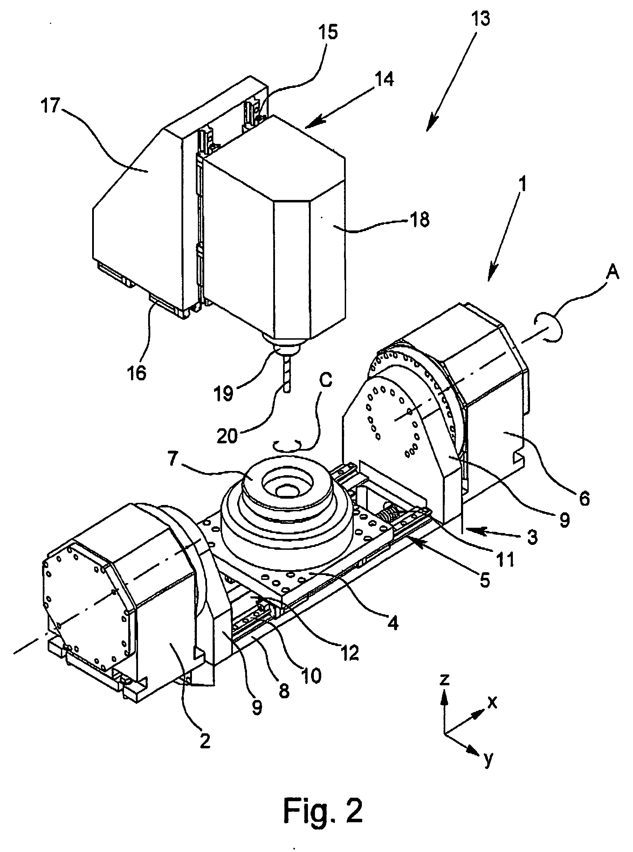

Fig. 2 zeigt ein Ausführungsbeispiel der erfindungsgemäßen Werkzeugmaschine 13 in einer perspektivischen Seitenansicht. Die Werkzeugmaschine 13 umfasst einen erfindungsgemäßen Werkstückträger 1 gemäß Fig. 1 und eine Werkzeugaufnahme 14. Die Werkzeugaufnahme 14 besteht aus einem Ständer 17 und einem Spindelkasten 18, wobei an dem Spindelkasten 18 im unterseitigen Bereich eine vertikal angeordnete Spindel 19 vorgesehen ist, die zur Aufnahme eines Werkzeugs 20, vorliegend eines Schaftfräsers, zur Bearbeitung eines - nicht dargestellten - Werkstücks dient. Ebenfalls nicht dargestellt ist, dass gemäß der bevorzugten Ausgestaltung der Werkstückträger 1 und die Werkzeugaufnahme 14 an einem gemeinsamen Maschinengestell befestigt sind, und dass die Werkzeugmaschine 13 eine numerische Steuerung zur Steuerung und Regelung der einzelnen Antriebe der Linearachsen x, y, z sowie der Rotationsachsen A, C und ein Messsystem bestehend aus mehreren Messeinheiten aufweist, wobei das Messsystem die Position und Stellung der Werkstückaufnahme 4 und der Werkzeugaufnahme 14 erfassen kann.

Der Teil der Werkzeugaufnahme 14, der das Werkzeug 20 aufnimmt, d. h. der Spindelkasten 18, kann mittels eines ersten Stellmittels 15 entlang einer ersten Stellachse z verfahren werden. Durch das Verfahren des Spindelkastens 18 entlang der ersten Stellachse z ist die vertikale Entfernung des Werkzeugs 20 zur Rotationsachse A einstellbar. In der dargestellten Ausrichtung der Werkzeugmaschine 13 bzw. der Werkzeugaufnahme 14 erstreckt sich die erste Stellachse z vertikal und orthogonal zur Rotationsachse A. Die Werkzeugaufnahme 14 ist zusätzlich mit einem zweiten Stellmittel 16 ausgestattet, dass ein Verfahren der Werkzeugaufnahme 14 - und damit auch des Spindelkastens 18 bzw. des Werkzeugs 20 - entlang einer zweiten Stellachse y ermöglicht. Die zweite Stellachse y erstreckt sich horizontal und ist dabei sowohl orthogonal zur Rotationsachse A als auch orthogonal zur ersten Stellachse z. Die zweite Stellachse y ermöglicht ein Positionieren des Werkzeugs 20 in Bezug auf den horizontalen Abstand des Werkzeugs 20 zur Rotationsachse A.

Bei dem dargestellten Ausführungsbeispiel sind sowohl das erste Stellmittel 15 als auch das zweite Stellmittel 16 am Ständer 17 befestigt, so dass vorliegend der Spindelkasten 18 über das erste Stellmittel 15 am Ständer 17 befestigt ist, wodurch der Spindelkasten 18 relativ zum Ständer 17 - entlang der ersten Stellachse z - verfahren werden kann. Das Werkstück, das mit dem in der Spindel 19 drehbar angeordneten Werkzeug 20 bearbeitet werden kann, ist bei der Bearbeitung auf der Planscheibe 7 des Teilgeräts 4 auf der Wiege 3 befestigt. Dabei kann das Werkstück durch Rotation um die Teilrotationsachse C und/oder um die Rotationsachse A sowie durch eine lineare Verschiebung entlang der Linearachse x relativ zum Werkzeug 20 positioniert werden.

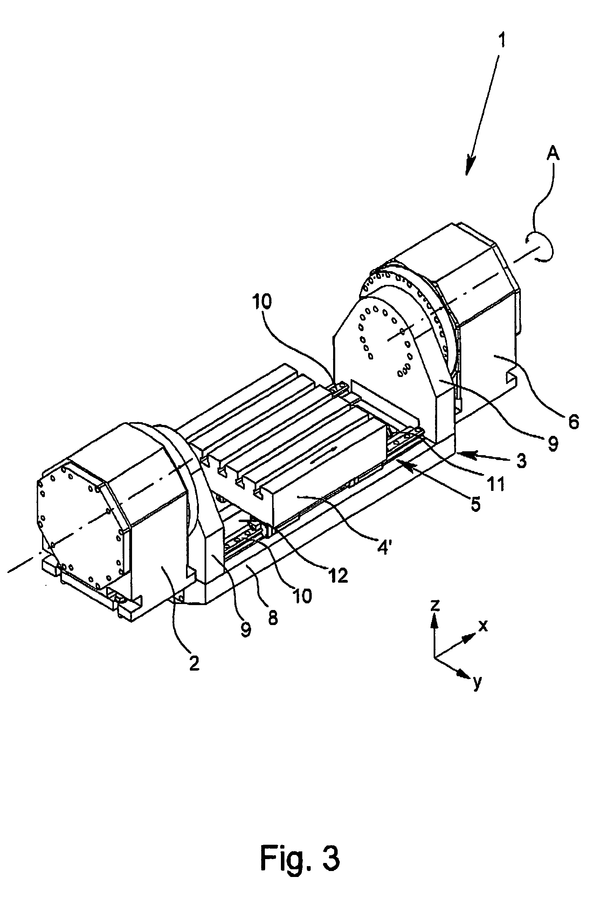

Fig. 3 zeigt ein zweites Ausführungsbeispiel eines Werkstückträgers 1, wobei sich der hier dargestellte Werkstückträger 1 nur dadurch von dem in Fig. 1 gezeigten Werkstückträger 1 unterscheidet, dass als Werkstückaufnahme ein Schlitten 4' anstelle eines Teilgeräts 4 vorgesehen ist. Der Schlitten 4' ist mittels der Verfahreinheit 5 auf der drehbaren Wiege 3 positionierbar und dient ebenfalls zur Aufnahme eines zu bearbeitenden Werkstücks bzw. einer Werkstückhalterung.

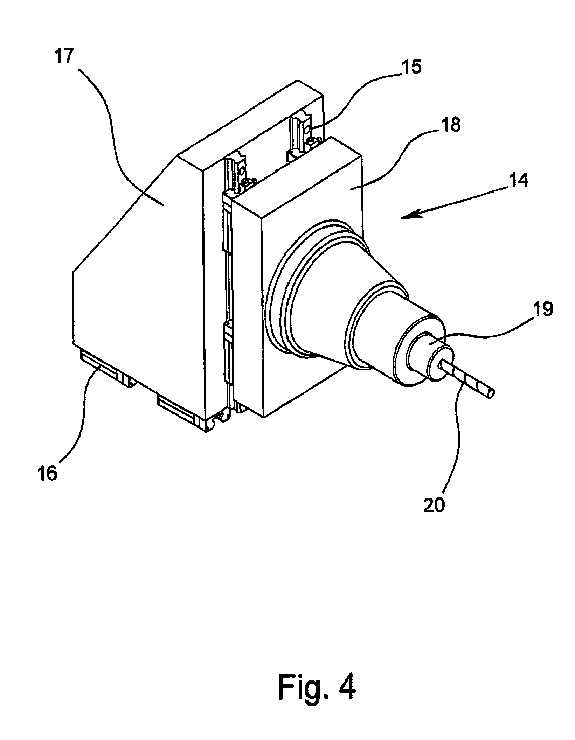

Fig. 4 zeigt ein alternatives Ausgestaltungsbeispiel einer Werkzeugaufnahme 14 für eine Werkzeugmaschine 13, die sowohl mit einem Werkstückträger 1 gemäß Fig. 1 als mit einem Werkstückträger 1 gemäß Fig. 2 verwendet werden kann. Die Werkzeugaufnahme 14 umfasst wiederum einen Ständer 17 und einen Spindelkasten 18. Der Unterschied dieser Werkzeugaufnahme 14 zu der in Fig. 2 dargestellten Werkzeugaufnahme 14 besteht darin, dass die Spindel 19 bei dem in Fig. 4 dargestellten Ausführungsbeispiel horizontal am Spindelkasten 18 befestigt ist. Durch die horizontale Anordnung der Spindel 19 am Spindelkasten 18 ergibt sich eine Mehrzahl ergänzender Bearbeitungsmöglichkeiten und -positionen im Vergleich zur - in Fig. 2 dargestellten - vertikalen Anordnung der Spindel 19. Auch die in Fig. 4 dargestellte Werkzeugaufnahme 14 bzw. der Ständer 17 weist ein erstes Stellmittel 15 und ein zweites Stellmittel 16 auf, wobei der Spindelkasten 18 wiederum mittels des ersten Stellmittels 15 am Ständer 17 befestigt ist. Der Spindelkasten 18 kann dadurch relativ zum Ständer 17 verfahren werden.

## Patentansprüche

1. Werkstückträger, insbesondere Drehschwenktisch, mit wenigstens einem Wender (2) wenigstens einer Wiege (3) und einem Gegenlager (6), wobei die Wiege (3) um eine sich zwischen dem Wender (2) und dem Gegenlager (6) erstreckende Rotationsachse (A) drehbar am Wender (2) und am Gegenlager (6) gelagert ist und auf der Wiege (3) mindestens eine Werkstückaufnahme (4) vorgesehen ist, und
wobei der Wender (2) einen elektrischen Antrieb aufweist, mit dem die Wiege (3) rotierbar ist,
**dadurch gekennzeichnet,**
**dass** die mindestens eine Werkstückaufnahme (4) mit einer Verfahreinheit (5) entlang einer Linearachse (x) verfahrbar ist, wobei die Linearachse (x) parallel zur Rotationsachse (A) verläuft,
**dass** ein die Position bzw. die Stellung der Werkstückaufnahme (4) erfassendes Messsystem und eine numerischen Steuerung vorgesehen sind, und dass das Messsystem mit dem elektrischen Antrieb des Wenders (2) und mit der Verfahreinheit (5) der Werkstückaufnahme (4) elektrisch verbunden ist, so dass die Position bzw. die Stellung der Werkstückaufnahme (4) mittels der numerischen Steuerung steuer- und regelbar ist.

2. Werkstückträger nach Anspruch 1, **dadurch gekennzeichnet, dass** das Gegenlager (6) ebenfalls über einen elektrischen Antrieb verfügt, der zum Antrieb des Wenders (2) synchron gesteuert wird.

3. Werkstückträger nach Anspruch 1 oder 2, **dadurch gekennzeichnet, dass** die mindestens eine Werkstückaufnahme (4) ein Teilgerät ist, das über eine Planscheibe (7) zur Montage wenigstens eines Werkstückes verfügt, wobei die Planscheibe (7) um eine senkrecht zur Linearachse (x) verlaufende Teilrotationsachse (C) rotierbar ist.

4. Werkstückträger nach einem der Ansprüche 1 bis 3, **dadurch gekennzeichnet, dass** die Wiege (3) über eine Grundplatte (8) verfügt, auf der die Verfahreinheit (5) vorgesehen ist, wobei die Grundplatte (8) vorzugsweise versetzt zur Rotationsachse (A) angeordnet ist.

5. Werkstückträger nach einem der Ansprüche 1 bis 4, **dadurch gekennzeichnet, dass** die Verfahreinheit (5) wenigstens zwei parallele Schienen (10) und wenigstens eine steuer- und regelbare Antriebsspindel (11) umfasst.

6. Werkstückträger nach einem der Ansprüche 3 bis 5, **dadurch gekennzeichnet, dass** das Messsystem mit dem Antrieb der Planscheibe (7) elektrische verbunden ist.

7. Werkzeugmaschine umfassend einen Werkstückträger (1) nach einem der Ansprüche 1 bis 6 und eine Werkzeugaufnahme (14), **dadurch gekennzeichnet, dass** die Werkzeugaufnahme (14) oder der Teil der Werkzeugaufnahme (14), der das Werkzeug aufnimmt, mit Hilfe eines ersten Stellmittels (15) entlang einer ersten Stellachse (z) verfahrbar ist, und
dass die Steuerung und das die Position bzw. die Stellung der Werkstückaufnahme (4) erfassende Messsystem so vorgesehen sind, dass sie mit den einzelnen elektrischen Antrieben der Linearachsen (x, y, z) und der Rotationsachsen (A, C) verbunden sind, so dass die Position bzw. die Stellung der Werkstückaufnahme (4) mittels der Steuerung steuer- und regelbar ist.

8. Werkzeugmaschine nach Anspruch 7, **dadurch gekennzeichnet, dass** die Werkzeugaufnahme (14) oder der Teil der Werkzeugaufnahme (14), der das Werkzeug aufnimmt, mit Hilfe eines zweiten Stellmittels (16) entlang einer zweiten Stellachse (y) verfahrbar ist, wobei die zweite Stellachse (y) senkrecht zur Linearachse (x) des Werkstückträgers (1) und senkrecht zur ersten Stellachse (z) verläuft.

9. Werkzeugmaschine nach Anspruch 7 oder 8, **dadurch gekennzeichnet, dass** der Werkstückträger (1) mit einem dritten Stellmittel entlang der zweiten Stellachse (y) verfahrbar ist, wobei das dritte Stellmittel derart unterhalb des Wenders (2) und unterhalb des Gegenlagers (6) positioniert ist, dass der Wender (2), die Wiege (3) und das Gegenlager (6) linear entlang der zweiten Stellachse (y) verfahrbar sind, wobei die zweite Stellachse (y) senkrecht zur Linearachse (x) des Werkstückträgers (1) und senkrecht zur ersten Stellachse (z) verläuft.

10. Werkzeugmaschine nach einem der Ansprüche 7 bis 9, **dadurch gekennzeichnet, dass** die Werkzeugaufnahme (14) einen Ständer (17) und einen Spindelkasten (18) aufweist, wobei der Spindelkasten (18) mit dem ersten Stellmittel (15) an dem Ständer (17) befestigt ist, so dass der Spindelkasten (18) relativ zum Ständer (17) bewegbar ist und wobei die Werkzeugaufnahme (14) vorzugsweise eine Spindel (19) aufweist, die wenigstens in ihrer Befestigungsebene rotierbar ist.

11. Werkzeugmaschine nach einem der Ansprüche 7 bis 10, **dadurch gekennzeichnet, dass** der Werkstückträger (1) und die Werkzeugaufnahme (14) an wenigstens einem gemeinsamen Maschinengestell befestigt sind.

12. Werkzeugmaschine nach einem der Ansprüche 7 bis 11, **dadurch gekennzeichnet, dass** die einzelnen Linearachsen (x, y, z) und die einzelnen Rotationsachsen (A, C) jeweils mit einem eigenen Antrieb und einer eigenen Messeinheit versehen sind, wobei die Antriebe über eine numerische Steurerung gesteuert und geregelt werden.

## Claims

1. Workpiece holder, in particular rotating turn table, with at least one turning unit (2), at least one cradle (3) and a counterbearing (6), wherein the cradle (3) is mounted on the turning unit (2) and on the counterbearing (6) so as to be rotatable about an axis of rotation (A) extending between the turning unit (2) and the counterbearing (6), and at least one workpiece fixture (4) is provided on the cradle (3), and wherein the turning unit (2) has an electric drive with which the cradle (3) can be rotated,
**characterized in**
**that** the at least one workpiece fixture (4) is moveable with a moving unit (5) along a linear axis (x), wherein the linear axis (x) runs parallel to the rotational axis (A),
in that a measuring system detecting the position of the workpiece fixture (4) and a numerical control system are provided, and in that the measuring system is electrically connected to the electric drive of the turning unit (2) and to the moving unit (5) of the workpiece fixture (4) such that the position of the workpiece fixture (4) can be controlled and regulated by means of the numerical control system.

2. Workpiece holder according to Claim 1, **characterized in that** the counterbearing (6) likewise has an electric drive which is controlled synchronously to the drive of the turning unit (2).

3. Workpiece holder according to Claim 1 or 2, **characterized in that** the at least one workpiece fixture (4) is a dividing head which has a faceplate (7) for the mounting of at least one workpiece, wherein the faceplate (7) can be rotated about a piece rotational axis (C) running perpendicularly to the linear axis (x).

4. Workpiece holder according to one of Claims 1 to 3, **characterized in that** the cradle (3) has a baseplate (8) on which the moving unit (5) is provided, wherein the baseplate (8) is preferably arranged offset with respect to the rotational axis (A).

5. Workpiece holder according to one of Claims 1 to 4, **characterized in that** the moving unit (5) comprises at least two parallel rails (10) and at least one controllable and regulable driving spindle (11).

6. Workpiece holder according to one of Claims 3 to 5, **characterized in that** the measuring system is electrically connected to the drive of the faceplate (7).

7. Machine tool comprising a workpiece holder (1) according to one of Claims 1 to 6 and a tool-holding fixture (14), **characterized in that** the tool-holding fixture (14) or that part of the tool-holding fixture (14) which accommodates the tool is moveable along a first adjustment axis (z) with the aid of a first adjustment means (15), and
**in that** the control system and the measuring system detecting the position of the workpiece fixture (4) are provided so as to be connected to the individual electric drives of the linear axes (x, y, z) and of the rotational axes (A, C) such that the position of the workpiece fixture (4) can be controlled and regulated by means of the control system.

8. Machine tool according to Claim 7, **characterized in that** the tool-holding fixture (14) or that part of the tool-holding fixture (14) which accommodates the tool is moveable along a second adjustment axis (y) with the aid of a second adjustment means (16), wherein the second adjustment axis (y) runs perpendicularly to the linear axis (x) of the workpiece holder (1) and perpendicularly to the first adjustment axis (z).

9. Machine tool according to Claim 7 or 8, **characterized in that** the workpiece holder (1) is moveable along the second adjustment axis (y) with a third adjustment means, wherein the third adjustment means is positioned below the turning unit (2) and below the counterbearing (6) in such a manner that the turning unit (2), the cradle (3) and the counterbearing (6) are moveable linearly along the second adjustment axis (y), wherein the second adjustment axis (y) runs perpendicularly to the linear axis (x) of the workpiece holder (1) and perpendicularly to the first adjustment axis (z).

10. Machine tool according to one of Claims 7 to 9, **characterized in that** the tool-holding fixture (14) has a stand (17) and a spindle box (18), wherein the spindle box (18) is fastened to the stand (17) by the first adjustment means (15) such that the spindle box (18) is moveable relative to the stand (17), and wherein the tool-holding fixture (14) preferably has a spindle (19) which is rotatable at least in the fastening plane thereof.

11. Machine tool according to one of Claims 7 to 10, **characterized in that** the workpiece holder (1) and the tool-holding fixture (14) are fastened to at least one common machine frame.

12. Machine tool according to one of Claims 7 to 11, **characterized in that** the individual linear axes (x, y, z) and the individual rotational axes (A, C) are each provided with a dedicated drive and a dedicated measuring unit, wherein the drives are controlled and regulated via a numerical control system.

## Revendications

1. Support de pièce, en particulier table pivotante rotative, comprenant au moins un plateaux verticaux (2), au moins un berceau (3) et un contre-palier (6), le berceau (3) étant monté sur le plateaux verticaux (2) et sur le contre-palier (6) de manière à pouvoir tourner autour d'un axe de rotation (A) s'étendant entre le plateaux verticaux (2) et le contre-palier (6) et au moins un porte-pièce (4) étant prévu sur le berceau (3), et
le plateaux verticaux (2) présentant un entraînement électrique, avec lequel le berceau (3) peut être tourné"
**caractérisé en ce que**
l'au moins un porte-pièce (4) peut être déplacé avec une unité de déplacement (5) le long d'un axe linéaire (x), l'axe linéaire (x) s'étendant parallèlement à l'axe de rotation (A),
un système de mesure détectant la position ou l'emplacement du porte-pièce (4) et une commande numérique sont prévus, et le système de mesure est connecté électriquement à l'entraînement électrique de le plateaux verticaux (2) et à l'unité de déplacement (5) du porte-pièce (4), de telle sorte que la position ou l'emplacement du porte-pièce (4) puissent être commandés et réglés au moyen de la commande numérique.

2. Support de pièce selon la revendication 1, **caractérisé en ce que** le contre-palier (6) dispose également d'un entraînement électrique, qui est commandé de manière synchronisée avec l'entraînement de le plateaux verticaux (2).

3. Support de pièce selon la revendication 1 ou 2, **caractérisé en ce que** l'au moins un porte-pièce (4) est un plateaux diviseur, qui dispose d'un plateau (7) pour le montage d'au moins une pièce, le plateau (7) pouvant tourner autour d'un pièce axe de rotation (C) s'étendant perpendiculairement à l'axe linéaire (x).

4. Support de pièce selon l'une quelconque des revendications 1 à 3, **caractérisé en ce que** le berceau (3) dispose d'une plaque de base (8), sur laquelle l'unité de déplacement (5) est prévue, la plaque de base (8) étant disposée de préférence de manière décalée par rapport à l'axe de rotation (A).

5. Support de pièce selon l'une quelconque des revendications 1 à 4, **caractérisé en ce que** l'unité de déplacement (5) comprend au moins deux rails parallèles (10) et au moins une broche d'entraînement (11) pouvant être commandée et réglée.

6. Support de pièce selon l'une quelconque des revendications 3 à 5, **caractérisé en ce que** le système de mesure est connecté électriquement à l'entraînement du plateau (7).

7. Machine-outil comprenant un support de pièce (1) selon l'une quelconque des revendications 1 à 6 et un porte-outil (14), **caractérisée en ce que** le porte-outil (14) ou la partie du porte-outil (14) qui reçoit l'outil peut être déplacé(e) à l'aide d'un premier moyen de commande (15) le long d'un premier axe de commande (z), et
la commande et le système de mesure détectant la position ou l'emplacement du porte-pièce (4) sont prévus de telle sorte qu'ils soient connectés aux entraînements électriques individuels des axes linéaires (x, y, z) et des axes de rotation (A, C), de telle sorte que la position ou l'emplacement du porte-pièce (4) puissent être commandés et réglés au moyen de la commande.

8. Machine-outil selon la revendication 7, **caractérisée en ce que** le porte-outil (14) ou la partie du porte-outil (14) qui reçoit l'outil peuvent être déplacés à l'aide d'un deuxième moyen de commande (16) le long d'un deuxième axe de commande (y), le deuxième axe de commande (y) s'étendant perpendiculairement à l'axe linéaire (x) du support de pièce (1) et perpendiculairement au premier axe de commande (z).

9. Machine-outil selon la revendication 7 ou 8, **caractérisée en ce que** le support de pièce (1) peut être déplacé avec un troisième moyen de commande le long du deuxième axe de commande (y), le troisième moyen de commande étant positionné sous le plateaux verticaux (2) et sous le contre-palier (6) de telle sorte que le plateaux verticaux (2), le berceau (3) et le contre-palier (6) puissent être déplacés linéairement le long du deuxième axe de commande (y), le deuxième axe de commande (y) s'étendant perpendiculairement à l'axe linéaire (x) du support de pièce (1) et perpendiculairement au premier axe de commande (z).

10. Machine-outil selon l'une quelconque des revendications 7 à 9, **caractérisée en ce que** le porte-outil (14) présente un support (17) et une boîte de broche (18), la boîte de broche (18) étant fixée sur le support (17) au moyen du premier moyen de commande (15), de telle sorte que la boîte de broche (18) puisse être déplacée par rapport au support (17) et le porte-outil (14) présentant de préférence une broche (19) qui peut tourner au moins dans son plan de fixation.

11. Machine-outil selon l'une quelconque des revendications 7 à 10, **caractérisée en ce que** le support de pièce (1) et le porte-outil (14) sont fixés sur au moins un bâti de machine commun.

12. Machine-outil selon l'une quelconque des revendications 7 à 11, **caractérisée en ce que** les axes linéaires individuels (x, y, z) et les axes de rotation individuelle (A, C) sont chacun pourvus d'un entraînement propre et d'une unité de mesure propre, les entraînements étant commandés et régulés par le biais d'une commande numérique.
